# EUROPEAN PATENT SPECIFICATION

(11) **EP 4 466 622 B1**
(45) Date of publication and mention of the grant of the patent: **10.06.2026**
(21) Application number: 23701489.9
(22) Date of filing: 23.01.2023
(51) Int. Cl.: G06F 21/57

(54) **EXTENDED SECURE BOOT FOR LAUNCHING A VIRTUAL MACHINE**
ERWEITERTER SICHERER BOOT ZUM STARTEN EINER VIRTUELLEN MASCHINE
DÉMARRAGE SÉCURISÉ ÉTENDU POUR LANCER UNE MACHINE VIRTUELLE

(30) Priority: 21.01.2022 EP 22152619
(43) Date of publication of application: 27.11.2024
(73) Proprietor: Cysec SA, 1015 Lausanne (CH)
(72) Inventor: KARLOV, Alexandre, 1033 Cheseaux-sur-Lausanne (CH)
(74) Representative: Plasseraud IP
(86) International application number: PCT/EP2023/051474
(87) International publication number: WO 2023/139246

(56) References cited:
- WO-A2-2016/118205
- US-A1- 2017 230 179
- US-A1- 2019 311 127
- IBM: "HARDWARE SUPPORT FOR MALWARE DEFENSE AND END-TO- END TRUST", 1 February 2017 (2017-02-01), pages 1 - 74, XP055703178, Retrieved from the Internet <URL:https://wiki.raptorcs.com/w/images/f/f0/AFRL-RI-RS-TR-2017-021.pdf> [retrieved on 20200609]

## Description

### Technical Field

The present disclosure relates to a method for launching a virtual machine by using an extended secure boot.

The present invention relates to a computer program and to a computer device for carrying out the method of according to the present invention.

### Background of the art

Cloud infrastructure drives innovation by allowing companies to easily aggregate, analyze and share sensitive data whether at enterprise or consumer levels. However, cloud-based services also face issues regarding their security, making it hard for organizations and citizens to embrace them.

Cloud service providers (CSP) offer encryption services protect data at rest and the data in transit. Data at rest refers to the information in persistent storage along with those present in databases. On the other hand, the data in transit account for the data that is transferred over a network.

However, data breaches might happen in the countermeasures that the CSP put in place. Therefore, it is a wise approach to include additional specific security measures to protect end-user data in case of an unexpected data breach in the cloud hosting sensitive data.

One possible threat during a data breach in a cloud is the theft of the image of one or more of an end-user VMs. These VM images might contain sensitive data that are not protected by the CSP countermeasures. Documents US2019/311127 and US2017/230179 form part of the technological background
Hence, there is a need to provide solutions that protect data stored in VM images as long as these images are not launched in specified VMs.

### Summary of the invention

The above problems are solved by the apparatus and the method according to present invention.

The invention concerns a method for launching a virtual machine in a cloud compute engine, the method comprising uploading an operating system disk image on said VM, said image comprising a boot bundle and at least one encrypted partition, generating a virtual machine image on said cloud compute engine by using secure boot, booting a virtual machine and launching said virtual machine image in the cloud compute engine, characterized in that the secure boot comprises the upload of a secure boot key module on the cloud compute engine so that the secure boot further comprises generating a virtual machine image comprising secure boot keys provided by secure boot key module and a partition key provided by a partition key module, authenticating the boot bundle by using the secure boot keys, continuing the boot of the virtual machine by decrypting the encrypted partitions using partition keys, extending the secure boot by checking the integrity of one or more decrypted partitions before, booting them finalizing the boot of the virtual machine by booting the partitions that don't follow the secure boot extension process, i.e. that are mounted without being verified previously.

In another aspect, the invention concerns a computer program comprising instructions which, when the program is executed by a computer, cause the computer to carry out method according to the present invention.

In another aspect, the invention relates to an apparatus comprising means for carrying out the method of according to the present invention.

### Description of the invention

The invention concerns a method for launching a virtual machine in a cloud compute engine, the method comprising uploading an operating system disk image on said VM, said image comprising a boot bundle and at least one encrypted partition, generating a virtual machine image on said cloud compute engine by using secure boot, booting a virtual machine and launching said virtual machine image in the cloud compute engine, characterized in that the secure boot comprises the upload of a secure boot key module on the cloud compute engine so that the secure boot further comprises generating a virtual machine image comprising secure boot keys provided by secure boot key module and a partition key provided by a partition key module, authenticating the boot bundle by using the secure boot keys, continuing the boot of the virtual machine by decrypting the encrypted partitions using partition keys, extending the secure boot by checking the integrity of one or more decrypted partitions before and booting them finalizing the boot of the virtual machine by booting the partitions that don't follow the secure boot extension process, i.e. that are mounted without being verified previously.
method for launching a virtual machine supported in a processing unit of a cloud compute engine named secure enclave, the method comprising
uploading an operating system disk image on said enclave, said image comprising a boot bundle and at least one encrypted partition,
generating a virtual machine image on said enclave by using secure boot,
booting a virtual machine and launching said virtual machine image in the secure enclave,
characterized in that the secure boot comprises the upload of a secure boot keys module on the cloud compute engine so that the secure boot further comprises
generating a virtual machine image comprising secure boot key provided by the secure boot key module and a partition key provided by a partition key module,
authenticating the boot bundle by using the secure boot key,
booting the virtual machine by decrypting the encrypted partitions using partitions keys

The present invention is mainly composed of the following functionalities: a secure boot that verifies the authenticity and the integrity of a first sequence of unencrypted software components of the operating system in a VM image launched in a cloud compute engine; a secure storage for keys that can seal keys with the secure boot measurement results; an encryption mechanism to encrypt and decrypt some partitions of the operating system (OS) running in the launched VM image; an extension of the secure boot that can verify the integrity of some of the partitions decrypted by the said encryption mechanism.

In the present invention, the secure boot starts by authenticating the boot bundle with the secure boot keys provisioned in the cloud secure engine. The said key provisioning allows to control the origin of the operating system launched in the provisioned cloud compute engine and to check the integrity of this operating system, preferably of the boot bundles of the operating system for instance the kernel. In other words, if a modified/corrupted version of the operating system disk image is uploaded in the cloud compute engine by a unauthorized party, the booting process will stop here.

Overall, the present invention focuses on providing a hardened operating system leveraging cloud infrastructure hardware elements to expose security features to application workloads. By realizing such operation, the end-user benefits from a trustworthy execution environment from the launch to the execution and from avoiding the exposition of its data in an unauthorized execution environment.

Preferably, the at least one operating system partitions that are not verified by the said secure boot are encrypted by specific keys, namely partitions keys, provisioned by a key generator. This allows the protection of the end-user data stored in the said encrypted partitions till the secure boot has successfully verified the authenticity and integrity of a first sequence of software components of the operating system to further increase the security of the extended secure boot.

Preferably, the partition key generator is chosen among trusted platform module TPM, virtual trusted platform module vTPM, a recovery key module either hardware based or software based

Preferably the partition key generator is compliant to NIST SP 800-90 B or similar.

In a preferred embodiment the method further comprises
checking the signature of the operating system disk image and if the signature check fails, the secure boot is cancelled.
This step ensures that the operating system image has not been corrupted or tampered with.

Preferably, the method further comprises creating at least a cluster on said cloud compute engine to deploy at least a workload using said virtual machine. Preferably, the method further comprises joining an existing cluster on said cloud compute engine to deploy at least a workload using said virtual machine.

In a preferred embodiment the boot bundle comprises at least one file chosen among an initramfs and a kernel. This step ensures the authenticity of initramfs and of the kernel and ensures that the boot bundle has not been tampered with.

Preferably, the at least one partitions are chosen among Extensible Firmware Interface EFI, system partition SYS, LUKS partition, data partition DATA

In a preferred embodiment, the operating system disk image comprises Extensible firmware Interface EFI, system partition SYS and data partitions.
This partitioning structure enables to segregate by design the system files provided from the application owner and user data. This is particularly relevant for enabling smooth and easy back-ups, the addition of new clusters and nodes.

Preferably, the secure boot comprises an unified extensible firmware interface UEFI functionality.

Preferably, the secure boot key module is an unified extensible firmware interface UEFI.
This advantageously enables to store keys and authenticate sub-parts of the secure boot.

In a preferred embodiment, the UEFI functionality is operated by an open virtual machine firmware OVMF.
In this embodiment, OVMF is a virtualization and emulation of the UEFI functionalities. This is particularly relevant for deployment through cloud providers platforms and services.

In another aspect, the invention further relates to a computer program comprising instructions which, when the program is executed by a computer, cause the computer to carry out method according to the present invention.

The particular advantages of the computer program are similar to the ones of the method of the invention and will thus not be repeated here.

In another aspect, the invention also relates to an apparatus comprising means for carrying out the method of according to the present invention.

The particular advantages of the apparatus, in other words a computer device, are similar to the ones of the method of the invention and will thus not be repeated here.

As used herein, the word "means" (singular or plural) preceded or followed by a function can be replaced by the word "unit" or " module".

The embodiments describe for the method also apply to the apparatus and to the computer program according to the present invention mutatis mutandis.

### Brief description of the drawings

Further particular advantages and features of the invention will become more apparent from the following non-limitative description of at least one embodiment of the invention which will refer to the accompanying drawings, wherein
- Figures 1 and 2 represent the extended secure boot according to the present invention;
- Figures 3 represents the implementation of the extended secure boot according to the present invention in the context of confidential Virtual Machine;
- Figure 4 represents the implementation of the extended secure boot according to the present invention in the context of confidential Virtual Machine on a cloud provider infrastructure.

### Detailed description of the invention

The present detailed description is intended to illustrate the invention in a non-limitative manner since any feature of an embodiment may be combined with any other feature of a different embodiment in an advantageous manner.

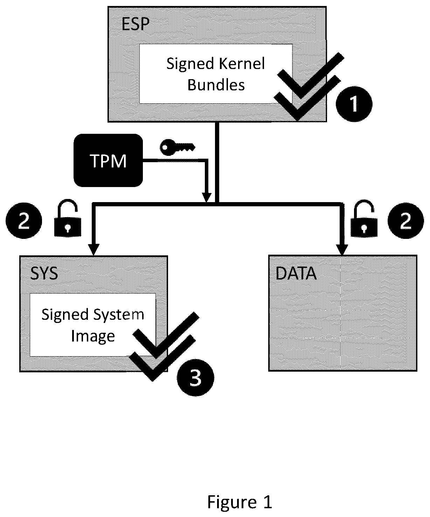

Figure 1 describes an embodiment of an extended secure boot according to the present invention after the first ignition of the virtual machine, which is most of all composed of three steps.

In a first step, the boot chain starts by verifying the authenticity and integrity of the boot bundle. In this example, the boot bundle comprises a signed kernel bundles stored in a partition called ESP. In a specific embodiment ESP can follow the system d-boot specifications and contains the signed kernel bundles used to start the boot chain.

In a second step, two partitions of the disk called SYS and DATA are encrypted by partitions keys provided by a key generator, herein a vTPM. When the kernel is booted, the control flow is passed to "initramfs" which will unlock the partitions SYS and DATA using the partition keys outputted by the vTPM. A recovery key (i.e. a partition key module) can be used instead of the TPM key.

In this embodiment, the extended secure boot comprises, in a third and last step. Once SYS is decrypted, the extended secure boot will check the signature of Operating System image, which is stored as a signed compressed filesystem. If the signature check fails, then the image is corrupted and/or has been tampered with.

In this embodiment, the system partition SYS is encrypted with dm-crypt . A LUKS header is used to store 2 keys:
1. primary key used in combination with a TPM either virtualized or physical
2. secondary key used for recovery, usually split into shares

In most of the cases, during a boot the TPM will output the key. If it is not the case the "key device" (i.e. the partition key module or recovery key module) will be used as a backup. If none works, the boot process will stop and partitions will remain encrypted.

In the present embodiment, all system and user data are stored in the DATA partition. Backups of this partition can be done to prevent data loss. It also contains BTRFS subvolumes that are used to hold on to various types of data, mainly the writable parts of the system ( /etc and /var overlays).

Similarly to the SYS partition, the DATA partition is unlocked using the TPM or a recovery key module as key generator after the key rotation.

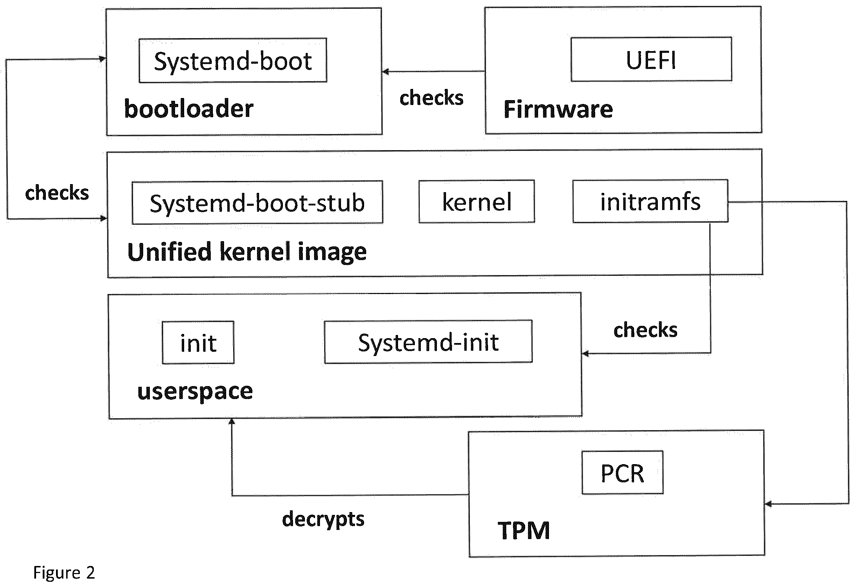

Figure 2 represents another embodiment of the secure boot according to the present invention. In this embodiment, the secure boot module comprises a UEFI as a firmware. This UEFI is used to check and enables the secure boot of the bootloader

In this specific embodiment, the ESP comprises systemd-boot as bootloader that checks the system-boot stub and the kernel with the secure boot keys. Systemd-boot will find the default kernel bundle or show the boot menu and pass the control flow to the stub. Secure boot is activated and used to authenticate kernel bundles. Here more precisely, Systemd-boot allows easy support of signed secure boot UEFI bundle.

Then, when the kernel is booted, the control flow is passed to "initramfs" which will unlock the partitions SYS and DATA using the partition keys outputted by the TPM. When the initramfs is done, the kernel switches the filesystem root and executes the second stage, the initialization.

The TPM is used to auto-unlock the SYS and DATA partition during the first stage of the initramfs. Specific TPM registers state (like secure boot state, dba bd dbx state, etc.) are used to encrypt the primary LUKS key. With this mechanism, disks can be decrypted only when a trusted kernel is booted.

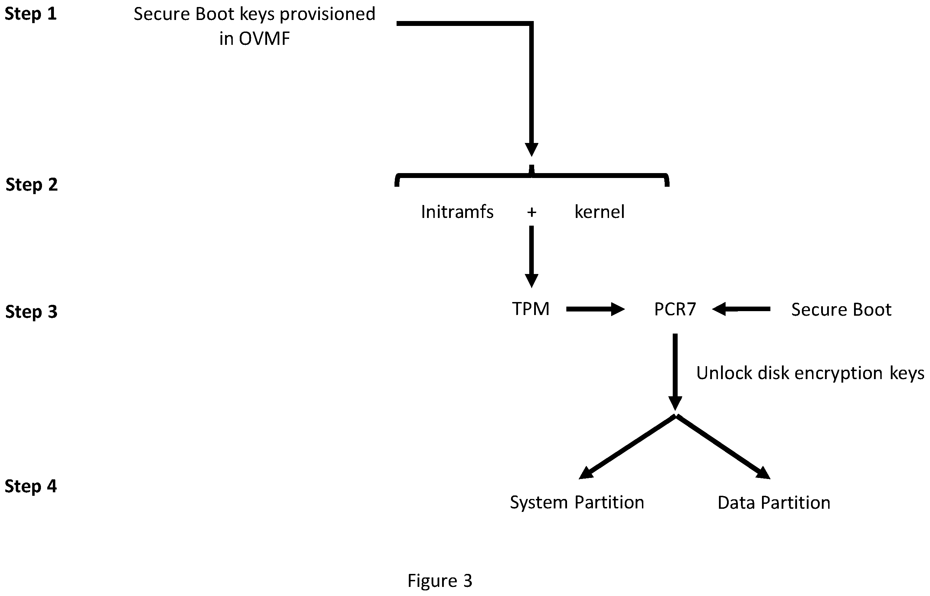

Figure 3 relates to the method implementation of the extended secure boot according to the present invention in the context of VM launch in cloud compute engine after the first ignition of the VM.

In a first step the secure boot keys are provisioned in OVMF which enables UEFI support for Virtual Machines in cloud compute engines.

In a second step the OS is initialized through the initramfs and kernel modules. When kernel is booted the control flow is passed to our first stage init: the initramfs. The initramfs is responsible to unlock SYS and DATA partitions. The OS may use an A/B scheme for system updates, which means the boot chain has to figure out which version of the system has to start. When the initramfs is done, the kernel switches the filesystem root and executes the second stage init. This second stage init is responsible to mount /etc and /var as RW, by overlaying correct RW btrfs subvolumes present in the DATA partition.

In a third step Secure boot is used to verify integrity and authenticity of the OS image. System provider public keys are placed in [pk] , [kek] , and [db] UEFI secure boot keystores. systemd-boot will ensure that only valid signed bundles, in regards of db and dbx , are booted. systemd-boot is itself signed by System provider key. Any updates of db and dbx from a booted system require [pk] or [kek] signatures. With this mechanism the platform ensures that only trusted kernels are able to boot.

In this context, the TPM is used to auto-unlock the SYS and DATA partition during the first stage init inside the initramfs. Some TPM registers state are used to encrypt the primary LUKS key. Registers like secure boot state, db and dbx state, etc can be used for example. With this mechanism disks can be decrypted only when a trusted kernel is booted.

In a fourth step partition encryption keys are unlocked in order to decrypt and map disk layout with at least two partitions: (1) system (SYS) and (2) data (DATA).

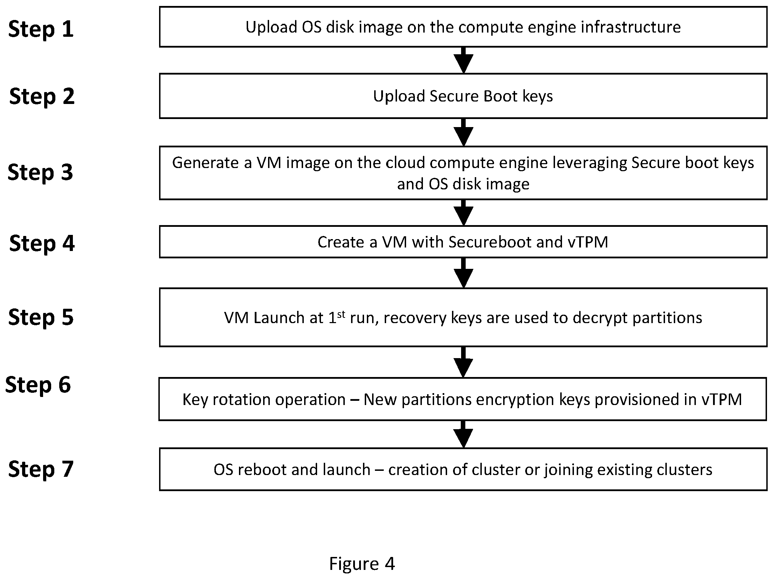

Figure 4 relates to the method implementation in the context of confidential VM launch in an enclave on a Cloud provider infrastructure.

In a 1^{st} step, the method consists in initiating and uploading an OS image In a cloud compute engine of the cloud infrastructure.

In a 2^{nd} step, the system provider secure boot keys are uploaded in the OVMF firmware of the said compute engine.

In a 3^{rd} step, the user generates a VM image on the Cloud compute engine exploiting the said secure boot keys loaded previously in OVMF and the said OS image disk. Preferably, steps 2 and 3 are performed in a single step.

In a 4^{th} step it is to mention that the compute infrastructure enables the launch of VMs as well as secure boot (as an example through TPM or Virtual TPM).

In a 5^{th} step, when the VM is launched for the first time, the partitions recovery keys are used to decrypt partitions and access the VM.

In a 6^{th} step, the user proceeds with key rotation to encrypt the partitions with new partitions keys provisioned in the vTPM. This step enable user to benefit from customized keys.

In a last step, the user can fully benefit from a trustworthy execution environment thanks to the features of the invention through the OS reboot and launch. And then, the user is capable to create clusters or join existing clusters where sensitive workloads are deployed on VMs.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Method for launching a virtual machine in a cloud compute engine, the method comprising
uploading an operating system disk image on said VM, said image comprising a boot bundle, at least one encrypted partition and two partition key generators, one of them being a recovery key module,
generating a virtual machine image on said cloud compute engine by using secure boot,
booting a virtual machine and launching said virtual machine image in the cloud compute engine,
**characterized in that** the secure boot comprises the upload of a secure boot key module on the cloud compute engine so that the secure boot further comprises
at first boot, generating a virtual machine image comprising secure boot keys provided by secure boot key module and partition keys provided by the recovery key module,
authenticating the boot bundle by using the secure boot keys,
continuing the boot of the virtual machine by decrypting the encrypted partitions using partition keys,
extending the secure boot by checking the integrity of one or more decrypted partitions before booting them,
finalizing the boot of the virtual machine by booting the partitions that don't follow the secure boot extension process, i.e. that are mounted without being verified previously,
proceeding with a key rotation process in the second key partition generator to encrypt the partitions with new partition keys provisioned in the said second key partition generator,
at the following boots of the said image, generating a virtual machine image using secure boot keys provided by the said secure boot key module and the partition keys provided by the said second partition key generator.

2. Method according to the preceding claim, wherein the second partition key generator is chosen among a trusted platform module TPM and a virtual trusted platform module vTPM either hardware based or software based.

3. Method according to claim 1 or 2, wherein the method further comprises
Checking the signature of the operating system disk image and if the signature check fails, the secure boot is cancelled.

4. Method according to any one of claims 1 to 3, wherein the method further comprises creating at least a cluster on said enclave to deploy at least a workload using said virtual machine.

5. Method according to any one of claims 1 to 3, wherein the method further comprises joining an existing cluster on said enclave to deploy at least a workload using said virtual machine.

6. Method according to any one of claims 1 to 5, wherein the boot bundle comprises at least one file chosen among an initramfs and a kernel.

7. Method according to any one of claims 1 to 6, wherein said at least one partitions is chosen among Extensible firmware Interface EFI, system partition SYS, LUKS partition, data partition DATA.

8. Method according to the preceding claim, wherein the operating system disk image comprises Extensible firmware Interface EFI, system partition SYS and data partitions.

9. Method according to any one of claims 1 to 8, wherein the secure boot comprises an unified extensible firmware interface UEFI functionality, preferably the secure boot key module is an unified extensible firmware interface UEFI.

10. Method according to the preceding claim, wherein the UEFI functionality is operated by an open virtual machine firmware OVMF.

11. A computer program comprising instructions which, when the program is executed by a computer, cause the computer to carry out method according to any one of claims 1 to 10.

12. An apparatus comprising means for carrying out the method of according to any one of claims 1 to 10.

## Patentansprüche

1. Verfahren zum Starten einer virtuellen Maschine in einer Cloud-Compute-Engine, das Verfahren umfassend:
Hochladen eines Betriebssystem-Diskbilds auf die VM, wobei das Bild einen Boot-Bundle, wenigstens eine verschlüsselte Partition und zwei Partition-Schlüsselgeneratoren umfasst, wobei einer von ihnen ein Wiederherstellung-Schlüsselmodul ist,
Erzeugen eines virtuellen Maschinenbilds auf der Cloud-Compute-Engine durch Verwendung von sicherem Booten,
Booten einer virtuellen Maschine und Starten des virtuellen Maschinenbilds in der Cloud-Compute-Engine,
**dadurch gekennzeichnet, dass** das sichere Booten das Hochladen eines sicheren Boot-Schlüsselmoduls auf die Cloud-Compute-Engine umfasst, so dass das sichere Booten ferner umfasst:
bei einem ersten Booten, Erzeugen eines virtuellen Maschinenbilds,
welches sichere Boot-Schlüssel, welche durch das sichere Boot-Schlüsselmodul bereitgestellt werden, und Partitionsschlüssel umfasst,
welche durch das Wiederherstellung-Schlüsselmodul bereitgestellt werden,
Authentifizieren des Boot-Bundles durch Verwenden der sicheren Boot-Schlüssel,
Fortführen des Bootens der virtuellen Maschine durch Entschlüsseln der verschlüsselten Partitionen unter Verwendung von Partitionsschlüsseln,
Ausdehnen des sicheren Bootens durch Überprüfen der Integrität von einer oder mehreren verschlüsselten Partitionen vor einem Booten davon,
Abschließen des Bootens der virtuellen Maschine durch Booten der Partitionen, welche nicht dem sicheren Boot-Ausdehnungsprozess folgen, d.h. welche gemountet werden, ohne zuvor verifiziert zu werden, Fortfahren mit einem Schlüssel-Rotationsprozess in dem zweiten Schlüssel-Partitionsgenerator, um die Partitionen mit neuen Partitionsschlüsseln zu verschlüsseln, welche in dem zweiten Schlüssel-Partitionsgenerator vorgehalten werden,
bei den nachfolgenden Booten des Bilds, Erzeugen eines virtuellen Maschinenbilds unter Verwendung von sicheren Boot-Schlüsseln, welche von dem sicheren Boot-Schlüsselmodul bereitgestellt werden, und den Partitionsschlüsseln, welche von dem zweiten Partition-Schlüsselgenerator bereitgestellt werden.

2. Verfahren nach dem vorhergehenden Anspruch, wobei der zweite Partition-Schlüsselgenerator unter einem vertrauenswürdigen Plattformmodul TPM und einem virtuellen vertrauenswürdigen Plattformmodul vTPM entweder Hardware-basiert oder Software-basiert ausgewählt wird.

3. Verfahren nach Anspruch 1 oder 2, wobei das Verfahren ferner umfasst: Überprüfen der Signatur des Betriebssystem-Diskbilds, und wenn die Signaturüberprüfung fehlschlägt, wird das sichere Booten abgebrochen.

4. Verfahren nach einem der Ansprüche 1 bis 3, wobei das Verfahren ferner ein Erzeugen von wenigstens einem Cluster an der Enklave umfasst, um wenigstens eine Nutzlast unter Verwendung der virtuellen Maschine auszubringen.

5. Verfahren nach einem der Ansprüche 1 bis 3, wobei das Verfahren ferner ein Verbinden eines existierenden Clusters an der Enklave umfasst, um wenigstens eine Nutzlast unter Verwendung der virtuellen Maschine auszubringen.

6. Verfahren nach einem der Ansprüche 1 bis 5, wobei das Boot-Bundle wenigstens eine Datei umfasst, welche unter einem Initramfs und einem Kernel ausgewählt wird.

7. Verfahren nach einem der Ansprüche 1 bis 6, wobei die wenigstens eine Partition ausgewählt wird unter erweiterbarer Firmware-Schnittstelle EFI, Systempartition SYS, LUKS-Partition, Datenpartition DATA.

8. Verfahren nach dem vorhergehenden Anspruch, wobei das Betriebssystem-Diskbild erweiterbare Firmware-Schnittstelle EFI, Systempartition SYS und Datenpartitionen umfasst.

9. Verfahren nach einem der Ansprüche 1 bis 8, wobei das sichere Booten eine vereinheitlichte erweiterbare Firmware-Schnittstellen UEFI-Funktionalität umfasst, vorzugsweise das sichere Boot-Schlüsselmodul eine vereinheitlichte erweiterbare Firmware-Schnittstelle UEFI ist.

10. Verfahren nach dem vorhergehenden Anspruch, wobei die UEFI-Funktionalität durch eine offene virtuelle Maschinen-Firmware OVMF betrieben wird.

11. Computerprogramm, welches Anweisungen umfasst, welche, wenn das Programm durch einen Computer ausgeführt wird, den Computer dazu veranlassen, das Verfahren nach einem der Ansprüche 1 bis 10 auszuführen.

12. Vorrichtung, umfassend Mittel zum Ausführen des Verfahrens nach einem der Ansprüche 1 bis 10.

## Revendications

1. Procédé de lancement d'une machine virtuelle dans un moteur de calcul en nuage, le procédé comprenant
le chargement d'une image de disque de système d'exploitation sur ladite VM, ladite image comprenant un faisceau de démarrage, au moins une partition chiffrée et deux générateurs de clés de partition, l'un d'entre eux étant un module de clé de récupération, la génération d'une image de machine virtuelle sur ledit moteur de calcul en nuage à l'aide d'un démarrage sécurisé,
le démarrage d'une machine virtuelle et le lancement de ladite image de machine virtuelle dans le moteur de calcul en nuage,
**caractérisé en ce que** le démarrage sécurisé comprend le chargement d'un module de clé de démarrage sécurisé sur le moteur de calcul en nuage de sorte que le démarrage sécurisé comprenne en outre
au premier démarrage, la génération d'une image de machine virtuelle comprenant des clés de démarrage sécurisé fournies par le module de clé de démarrage sécurisé et des clés de partition fournies par le module de clé de récupération,
l'authentification du paquet de démarrage à l'aide des clés de démarrage sécurisé,
poursuivre le démarrage de la machine virtuelle en déchiffrant les partitions chiffrées à l'aide de clés de partition,
l'extension du démarrage sécurisé en vérifiant l'intégrité d'une ou plusieurs partitions déchiffrées avant de les démarrer,
la finalisation du démarrage de la machine virtuelle en démarrant les partitions qui ne suivent pas le processus d'extension de démarrage sécurisé, c'est-à-dire qui sont montées sans avoir été préalablement vérifiées,
le passage à un processus de rotation de clé dans le second générateur de partition de clé pour chiffrer les partitions avec de nouvelles clés de partition fournies dans ledit second générateur de partition de clé,
aux démarrages suivants de ladite image, la génération d'une image de machine virtuelle à l'aide de clés de démarrage sécurisé fournies par ledit module de clé de démarrage sécurisé et des clés de partition fournies par ledit second générateur de clé de partition.

2. Procédé selon la revendication précédente, dans lequel le second générateur de clé de partition est choisi parmi un module de plateforme de confiance, TPM, et un module de plateforme de confiance virtuel, vTPM, basé sur du matériel ou sur un logiciel.

3. Procédé selon la revendication 1 ou 2, dans lequel le procédé comprend en outre : la vérification de la signature de l'image de disque de système d'exploitation et, en cas d'échec de la vérification de la signature, le démarrage sécurisé est annulé.

4. Procédé selon l'une quelconque des revendications 1 à 3, dans lequel le procédé comprend en outre la création d'au moins un cluster sur ladite enclave pour déployer au moins une charge de travail à l'aide de ladite machine virtuelle.

5. Procédé selon l'une quelconque des revendications 1 à 3, dans lequel le procédé comprend en outre la jonction d'un cluster existant sur ladite enclave pour déployer au moins une charge de travail à l'aide de ladite machine virtuelle.

6. Procédé selon l'une quelconque des revendications 1 à 5, dans lequel le faisceau de démarrage comprend au moins un fichier choisi parmi un initramfs et un noyau.

7. Procédé selon l'une quelconque des revendications 1 à 6, dans lequel ladite au moins une partition est choisie parmi interface de firmware extensible, EFI, partition système, SYS, partition LUKS, partition de données, DATA.

8. Procédé selon la revendication précédente, dans lequel l'image de disque de système d'exploitation comprend une interface de firmware extensible, EFI, une partition de système, SYS, et des partitions de données.

9. Procédé selon l'une quelconque des revendications 1 à 8, dans lequel le démarrage sécurisé comprend une fonctionnalité d'interface de firmware extensible unifiée, UEFI, de préférence le module de clé de démarrage sécurisé est une interface de firmware extensible unifiée, UEFI.

10. Procédé selon la revendication précédente, dans lequel la fonctionnalité UEFI est exploitée par un firmware de machine virtuelle ouvert, OVMF.

11. Programme informatique comprenant des instructions qui, lorsque le programme est exécuté par un ordinateur, amènent l'ordinateur à réaliser le procédé selon l'une quelconque des revendications 1 à 10.

12. Appareil comprenant des moyens de réalisation du procédé selon l'une quelconque des revendications 1 à 10.
